# EUROPEAN PATENT SPECIFICATION

(11) **EP 3 417 590 B1**
(45) Date of publication and mention of the grant of the patent: **25.03.2020**
(21) Application number: 17706355.9
(22) Date of filing: 07.02.2017
(51) Int. Cl.: H04L 29/06

(54) **PHISHING ATTACK DETECTION AND MITIGATION**
ERKENNUNG VON PHISHING-ANGRIFFEN UND EINDÄMMUNG
DÉTECTION D'ATTAQUE D'HAMEÇONNAGE ET LIMITATION

(30) Priority: 15.02.2016 US 201615043814
(43) Date of publication of application: 26.12.2018
(73) Proprietor: Microsoft Technology Licensing LLC, Redmond, Washington 98052-6399 (US)
(72) Inventor: MANNING DAWSON, Sara Louise, Redmond, Washington 98052-6399 (US)
(74) Representative: Grünecker Patent- und Rechtsanwälte PartG mbB
(86) International application number: PCT/US2017/016762
(87) International publication number: WO 2017/142734

(56) References cited:
- US-A1- 2006 168 066
- US-A1- 2008 115 214
- US-B1- 8 839 369

## Description

### TECHNICAL BACKGROUND

Among the many ways hackers attempt to obtain sensitive user information, phishing attacks have become very prevalent and destructive. A phishing attack is an attempt by a malicious entity to acquire sensitive information by masquerading as a trustworthy entity in an electronic communication. For example, an end-user may receive an email that appears to be from a trusted source, but that is actually from an untrustworthy source. In addition, the email may solicit a username, password, financial information, secrets, or other information from the user that can then be used to illicitly access user accounts.

A common phishing technique is to include a uniform resource locator (URL) link in an email or other such digital communication (e.g. instant message, social network post, or micro-blog post). Clicking on the URL may open a web page or app that looks like a trusted entry point to the user, but is actually being served from a different location. A web page may be a replica of a corporate login page, for example, and any differences between the phishing page and the legitimate page may go unnoticed by the user. Thus, the user may unwittingly supply his or her login credentials to the malicious actor behind the attack.

Phishing attacks can cause enormous damage to their victims from a personal and business perspective. From a more technical perspective, phishing attacks can lead to damaged equipment and infrastructure, wasted downtime, and expensive repairs and/or replacements. The computing and communication resources needed to effectively react to or even prevent malicious attacks of any kind are enormous and are a drag on the performance of systems, and the software and services that run on them. At a smaller scale, malicious attacks can lead to compromised devices and sub-optimal device performance.

### OVERVIEW

Anti-phishing technology is disclosed herein that improves the detection and mitigation of phishing attacks. In an implementation, incoming emails are examined by an edge service for those that may include a web link to a web page. When an email is encountered that includes such a link, the web page is retrieved and compared to a protected web page to determine if the email represents an occurrence of a phishing attack. If so, steps are taken to mitigate the attack against the protected page, such as by deleting the email or otherwise preventing it from being delivered to a recipient.

This Overview is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

US 2008/115214 A1 discloses a process to protect a web page. The process may be performed by processing logic that may comprise hardware (e.g., circuitry, dedicated logic, programmable logic, microcode, etc.), software (such as instructions run on a processing device), or a combination thereof. Processing logic receives a request from a user to access a web page having an URL different from the URL of the protected web page (processing block 230). The user may submit the request by clicking on a link (e.g., a hyperlink) in another web page, an electronic mail message, etc.

US 8 839 369 B1 discloses that in one embodiment, detection of email phishing attacks is initiated when an email is received in a computer system. The email is parsed for features indicative of an email phishing attack, such as a link to an external website. The link to the website is followed to connect to and access the website. Fictitious information, such as fake user credentials or fake credit card information, is provided to the website. The response of the website to the fictitious information is evaluated to determine if the website is a phishing site. The website is deemed to be a phishing site when the website accepts the fictitious information as valid. The email is blocked to prevent its addressee from opening the email when the email is deemed part of a phishing attack, such as when it links to a phishing site.

US 2006/168066 A1 discloses methods for determining whether an email message is being used in a phishing attack in real time. In one embodiment, before an end user receives an email message, the email message is analyzed by a server to determine if the email message is a phishing email. The server parses the email message to obtain information which is used in an algorithm to create a phishing score. If the phishing score exceeds a predetermined threshold, the email is determined to be a phishing email message. In a further embodiment, an email can be determined a phishing email based on a comparison between descriptive content extracted from the email and stored descriptive content.

It is the object of the present invention to provide an improved method and system to detect and mitigate phishing attacks.

The object is achieved by the subject matter of the independent claims.

Embodiments are defined by the dependent claims.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 illustrates an implementation of enhanced phishing attack detection and mitigation.
Figure 2 illustrates an anti-phishing process in an implementation.
Figure 3 illustrates an operational sequence in an implementation of enhanced phishing detection and mitigation.
Figure 4 illustrates another implementation of enhanced phishing attack detection and mitigation.
Figure 5 illustrates an anti-phishing process in an implementation.
Figure 6 illustrates an operational sequence in an implementation of enhanced phishing detection and mitigation.
Figure 7 also illustrates an implementation of enhanced phishing attack detection and mitigation.
Figure 8 illustrates an anti-phishing process in an implementation.
Figure 9 illustrates a computing system suitable for implementing the anti-phishing technology disclosed herein, including any of the architectures, elements, processes, and operational scenarios and sequences illustrated in the Figures and discussed below in the Technical Disclosure.

### TECHNICAL DISCLOSURE

Technology is disclosed herein for detecting and mitigating phishing attacks. Malicious hackers will often harvest usernames and passwords by spoofing an email to appear as though it is arriving from an internal source, putting a link within the mail, and having the link direct a user to a website, app, or other resource that looks a lot like their typical sign-in page or other sensitive property.

In the Microsoft® Office365® or Azure® cloud services, end edge service is contemplated herein that can protect against this activity by "detonating" links in emails on the perimeter as they come in. The edge service looks for link destinations that are similar to sign-in pages, whether they be internal or external pages, federated or non-federated pages, or even sign-in pages for individual users.

The edge service achieves a technical effect by identifying phishing attacks and preventing the immediate and long-term damage to resources that can result. For example, resources may be conserved when a phishing attack is thwarted, as an end-user need not go through the process of obtaining new credentials, repairing damage, and otherwise taking correct steps to fix whatever damage resulted from the attack. In the aggregate, individuals and enterprises alike are spared the operational downtime that may result from such attacks.

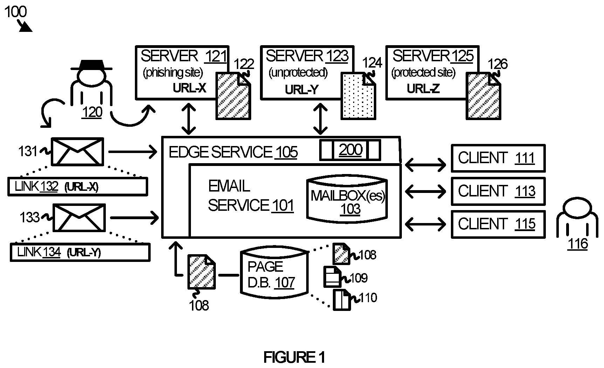

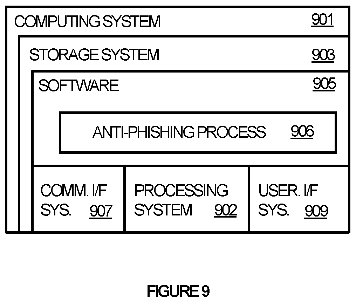

Referring to Figure 1, implementation 100 is illustrated in an embodiment of anti-phishing technology. Implementation 100 involves email service 101, mailbox 103, and edge service 105. Edge service 105 provides an anti-phishing function with respect to email service 101 and potentially any other online services. Edge service 105 may be implemented on one or more computing systems (physical, virtual, or any combination thereof), of which computing system 901 in Figure 9 is representative.

Mailbox 103 is representative of a data storage repository in which emails associated with clients are hosted. Client 111, client 113, and client 115 are representative of email clients that communicate with email service 101 to send, receive, and otherwise access the contents of a user's mailbox.

Edge service 105 includes a page database 107 that stores instances of protected web pages, represented by page 108, page 109, and page 110. Pages 108, 109, and 110 correspond to properties that edge service 105 protects from phishing attacks. For example, page 108 corresponds to web page 126 hosted by server 125.

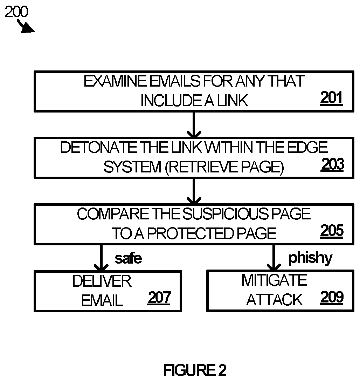

In operation, edge service 105 employs anti-phishing process 200 in Figure 2 to protect end-users and sites from phishing attacks. As an example, server 125 hosts a website that is protected by edge service 105 with respect to email-based phishing attacks. In contrast, server 123 hosts an unprotected website, while server 121 hosts a phishing site, as is explained in more detail below.

Referring parenthetically to the steps illustrated in Figure 2, edge service 105 examines incoming emails for the presence of a web link, e.g. a URL (step 201). If an email includes such a link, the links is "detonated" by edge service 105 (step 203). Detonating a link may include, for example, requesting the website or other such resource from its network location. Once it is downloaded, edge service 105 compares the web page to one or more protected pages (step 205). Examples of other resources include mobile apps, phone numbers (or URLs that launch an Internet phone call or video chat), or any other type of resource through which a user might provide identifying and other sensitive information.

Depending upon the results of the comparison, the email may be delivered to a mailbox if safe (step 207) or steps may be taken to mitigate if the email is considered a phishing attack (step 209). The results of the comparison may indicate that the two pages are the same or similar, in which case an email is deemed to be an attack (assuming the URL refers to a location other than a valid location for the protected page, app, or other such resource). In some case, the comparison may indicate that the two pages are sufficiently different that the email does not represent an attack on a protected site.

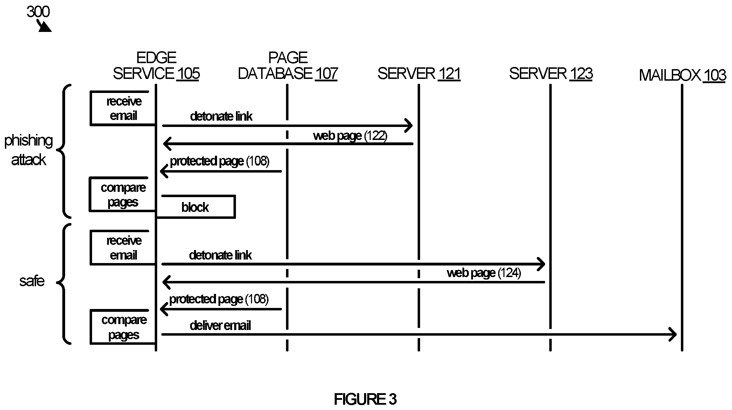

Figure 3 illustrates an operational sequence 300 with respect to implementation 100. To begin, edge service 105 receives email 131, which may be assumed for exemplary purposes to represent a phishing attack. Email 131 includes link 132 (URL-X), which resolves to server 121 and web page 122. Edge service 105 detonates link 132, meaning that it retrieves the resource associated with the link, or web page 122. Edge service 105 then compares web page 122 to one or more protected pages in page database 107. In this example, web page 122 is compared to page 108 and, due to their similarity, results in a designation of email 131 as an occurrence of a phishing attack. Email 131 is blocked from being delivered to a recipient/mailbox.

Edge service 105 next receives email 133 which includes link 134. Link 134 (URL-Y) which links to server 123 and web page 124. Edge service 105 detonates the link (even though web page 124 is not a protected page) and downloads web page 124. A comparison of web page 124 to any one or more of the pages in page database 107 results in a designation of email 133 as being safe- or at least, not a phishing attack. Email 133 is provided to email service 101 accordingly, for delivery to a mailbox.

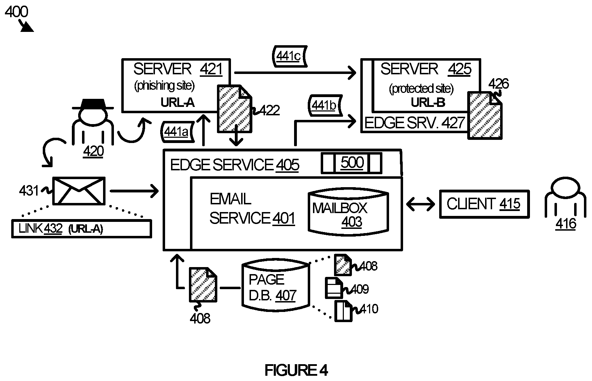

Figure 4 illustrates another implementation 400 of anti-phishing technology. Implementation 400 involves email service 401, which is protected by edge service 405. Email service 401 includes mailbox 403, which is representative of the mailboxes in which emails are stored for consumption by email clients. Client 415 is representative of one such client that a user (e.g. user 416) may interact with in the context of sending, receiving, and reading email.

Edge service 405 includes page database 407 in which copies of protected web page are stored, examples of which are provided by page 408, page 409, and page 410. Edge service 405 may be implemented on one or more computing systems (physical, virtual, or any combination thereof), of which computing system 901 in Figure 9 is representative.

Implementation 400 also involves server 425, which is representative of a service that may host a protected website. Server 425 is protected implicitly by edge service 405 as it examines incoming emails, but also by its own edge service- edge service 427. Edge service 427 cooperates with edge service 405 to thwart phishing attacks by malicious actors. In particular, edge service 405 employs anti-phishing process 500 to protect end-users and sites from phishing attacks. As an example, server 421 is representative of a server that hosts a phishing site via which a user may unwittingly supply sensitive account information, such as login credentials, financial information, company secret, personally identifying information, and the like.

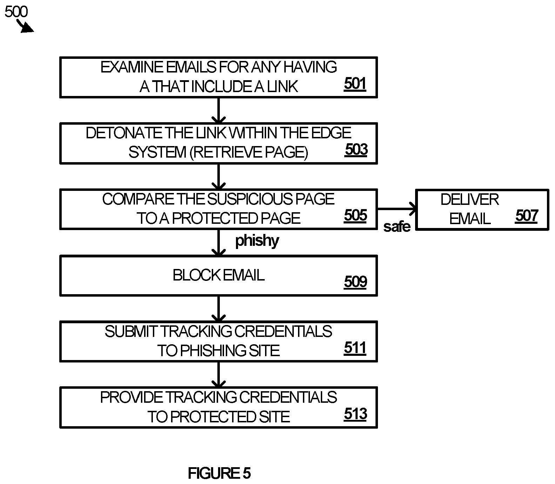

Referring parenthetically to the steps illustrated in Figure 5, edge service 405 examines incoming emails for the presence of a web link, e.g. a URL (step 501). If an email includes such a link, the links is detonated by edge service 405 (step 503). Detonating the link results in edge service 405 downloading the web page from its network location, at which time it is compared to one or more protected pages to determine if they are similar enough that the email may be designated a phishing attack (step 505). If the pages are not similar enough, then the email may be provided to email service 401 for delivery to a recipient (step 507). If the pages are very similar, then the email may be considered "phishy" and steps are taken to mitigate a potential phishing attack.

For example, the email may be blocked (step 509). This may occur externally to email service 401 by edge service 405, such that the email never even reaches the email system. In other implementations, the email may be provided to email service 401 for other security treatment, such as placing the email in a quarantined location, in a junk-mail folder, or in some other location. Email service 401 may simply delete the email and/or catalog it for later investigation.

In addition to blocking or otherwise mitigating the attack, edge service 405 performs a counter-attack by supplying tracking credentials to through the suspect web page (web page 422), as-if client 415 or any other end-user had opened the link (step 511). The same tracking credentials can be provided to the operator or other entity associated with a protected site (step 513). The protected entity or its surrogates may then monitor for any later attempt for a login using the tracking credentials. This attempt may be blocked, but in other situations, the attempt may be allowed. The malicious actor using the tracking credentials can be allowed into a secure region of the protected site (or diverted to another site) and interrogated electronically for information that may be helpful in defeating other attacks. For example, an Internet protocol (IP) address associated with the attacker may be learned, as well as other identifying characteristics.

Other mitigation steps that may be performed include removing the email from any other mailbox it was delivered to, reporting the email to an administrative function, and reporting to the administrative function how many recipients clicked on the URL

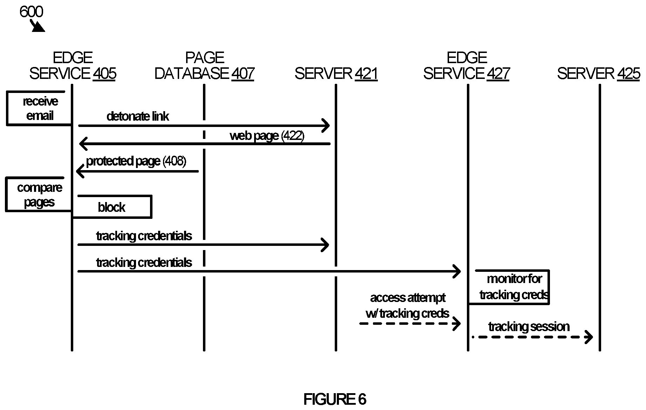

Figure 6 illustrates an operational sequence 600 with respect to implementation 400. In operational sequence 600, edge service 405 receives an email, represented by email 431. Edge service 405 inspects the email to determine if it includes a link, which it does: link 432 to URL-A. Edge service 405 retrieves web page 422 from server 421 using link 432 and compares it to one or more of the pages in page database 407, including page 408.

As web page 422 is determined to be similar to page 408, edge service 405 designates email 431 as a phishing attack and takes steps to block the email. In addition, edge service 405 submits tracking credentials to server 421. For example, edge service 405 mimics a login as-if an end-user were unwittingly supplying his or her credentials in response to the phishing attack. Edge service 405 also provides the tracking credentials to edge service 427. Moving forward, edge service 427 can monitor for surreptitious attempts to login to server 425 with the tracking credentials.

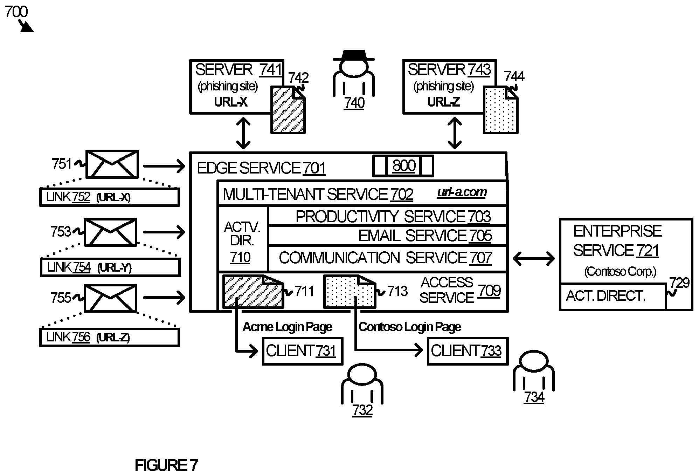

Figure 7 illustrates another implementation 700 of anti-phishing technology in an embodiment. Implementation 700 includes edge service 701, which protects various properties in a multi-tenant service 702. Edge service 701 may be implemented on one or more computing systems (physical, virtual, or any combination thereof), of which computing system 901 in Figure 9 is representative.

Multi-tenant service 702 includes a collection of online services, such as a productivity service 703, an email service 705, and a communication service 707. Office365® from Microsoft® is an example of a multi-tenant service, which hosts various online tenancies for individual tenants. Multi-tenant service 702 may also engage with individual users.

As an example, multi-tenant service 702 may provide email, document storage, and productivity services to an enterprise, e.g. Acme Corp. Employees or other personnel associated with Acme may utilize client applications to login to multi-tenant service 702. Client 731 is representative of one such application and is associated with user 732.

Access service 709 is a layer in multi-tenant service 702 that provides access functionality with respect to client access requests. Included in the functionality provided by access service 709 is a front-page or homepage functionality wherein a particular homepage is provided to an end-user when he or she navigates to a URL associated with multi-tenant service 702. The URL may be a global name such as URL-A.com or it may be a tenant-specific URL that still resolves to multi-tenant service 702.

When a user logs-in to multi-tenant service 702, a specific login page for their enterprise may be presented to the user. For example, client 731 is served and presents web page 711 to user 732. The web page 711 may be a login page customized to Acme Corp. User 732 supplies his or her login credentials through web page 711, which are then checked by an active directory service 710 that handles some aspects of user authentication and/or authorization. Assuming a user request is valid, access is granted to the various services provided by multi-tenant service 702.

Federated arrangements are also supported by multi-tenant service 702, whereby authentication and/or authorization is handled by a tenant enterprise. As an example, Contoso Corp. handles its own authorization and/or authentication by way of an active directory service 729 running in enterprise service 721. Thus, when users attempt to login to multi-tenant service through access service 709, the homepage for Contoso is served to them from access service 709, but their credentials are checked by active directory service 729. For example, user 734 associated with client 733 is presented with web page 713 for Contoso, through which he or she supplies login credentials. The credentials are communicated to active directory service 710, which may (or may not) authenticate and/or authorize the user.

Edge service 701 employs anti-phishing process 800 to protect tenants and their end-users from phishing attacks. As an example, server 741 and server 743 are representative of servers that host phishing sites via which a user may unwittingly supply sensitive account information, such as login credentials and the like. It is assumed for illustrative purposes that server 741 hosts a web page 742 that corresponds to the login page for Acme (web page 711), whereas server 743 hosts a web page 744 that does not correspond to any property in multi-tenant service 702. Rather, web page 744 may correspond to an external website, such as the login page for social network or e-commerce service.

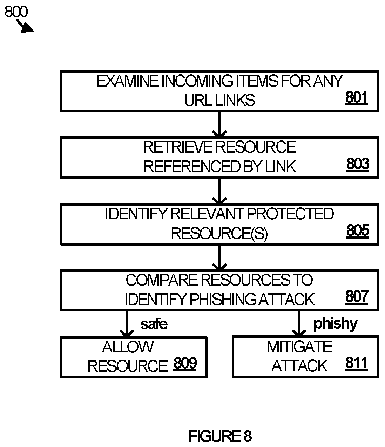

Referring parenthetically to the steps illustrated in Figure 8, edge service 701 examines incoming emails for the presence of a web link, e.g. a URL (step 801), and retrieves the resource associated with the URL (step 803). Edge service 701 also identifies which protected resource or resources may be implicated by the web link in the email (step 805).

Identifying an appropriate resource may include selecting the protected resource based on a domain or tenancy associated with the recipient of an incoming email. For example, if the recipient is an Acme employee, then web page 711 would be identified as a protected source, whereas if the recipient is a Contoso employee, then web page 713 would be identified as a protected resource. Multiple protected resourced may be identified, especially when there are multiple recipients on an incoming email.

The protected resource may also be identified based on an analysis of the character string in the URL in an email. For example, if the URL includes a character string that is approximately the same (but not exactly the same) as a known and valid URL, then the web page associated with the valid URL may be identified as a protected resource.

Using a social network as an example, its login page URL may be www.socialnetwork.com/login. An incoming email may include a URL that is approximately the same (e.g. www.socialnetwerk.com/login) but that differs slightly. When such a URL is present in an incoming email, edge service 701 would recognize that the URL is a rough approximation of the valid URL for the social network. Accordingly, edge service 701 would retrieve the valid login page for the social network to compare against whatever web page is returned by the suspect URL

Alternatively - or in addition to the technique described above - edge service 701 may maintain a pre-determined set of web pages that are always designated as protected pages. For instance, the login pages (or other pages) for high-traffic social networking sites, e-commerce sites, or any other pre-determined site could be included in a set of pages that are considered protected, and thus are used in a comparison to potentially-suspect web pages.

Once the protected page or pages are identified, edge service 701 compares the downloaded page implicated by the URL in the incoming email to each of the protected pages (step 807). If the pages are dissimilar enough, then the email is considered safe the associated resource allowed (step 809). If the pages are the same or similar enough, then the email is considered "phishy" and the potential attack is mitigated (step 811). For example, the email may be blocked, quarantined, or otherwise prevented from being delivered.

Edge service 701 may also be capable of performing a counter-attack by supplying tracking credentials to through the suspect web page. The same tracking credentials can be provided to the operator or other entity associated with a protected site, such as the operator of a social network or an e-commerce cite. The protected entity or its surrogates may then monitor for any later attempt for a login using the tracking credentials and can take further measures to mitigate the same or other malicious attacks.

Referring to implementation 700 in an operational example, edge service 701 receives various incoming digital items, represented by email 751, email 753, and email 755. Email 751 includes link 752 with URL-X; email 753 includes link 754 with URL-Y; and email 755 includes link 756 with URL-Z. Other types of digital content may also be handled by edge service 701 in addition to email, such as documents, instant messages, and blog posts. Edge service 701 may also be capable of examining email attachments.

Edge service 701 detonates link 752, which results in web page 742 being downloaded from server 741, as URL-X resolves to that site. It may be assumed that email 751 includes user 732 as a recipient. Accordingly, web page 742 is compared to web page 711 (the login page for Acme personnel). Since the two pages are the same or mostly similar, email 751 is considered a phishing attack and is blocked or otherwise mitigated. In this manner, user 732 is prevented from unwittingly supplying his or her credentials to the malicious actor 740 associated with the phishing site.

The link 754 in email 753 can be detonated, but may not implicate a protected page. For instance, URL-Y may resolve to a harmless website that that bears no resemblance to any tenant login pages or any other protected pages. Thus, email 753 can pass through to email service 705 or any other service.

The link 756 in email 755 is also detonated and results in the download of web page 744. As web page 744 is the same as or similar enough to the login page for Contoso (web page 713), email 755 may be considered a phishing attack. The message can be deleted, prevented from being delivered, or otherwise mitigated.

Figure 9 illustrates computing system 901, which is representative of any system or collection of systems in which the various applications, services, scenarios, and processes disclosed herein may be implemented. Examples of computing system 901 include, but are not limited to, server computers, rack servers, web servers, cloud computing platforms, and data center equipment, as well as any other type of physical or virtual server machine, container, and any variation or combination thereof. Other examples may include smart phones, laptop computers, tablet computers, desktop computers, hybrid computers, gaming machines, virtual reality devices, smart televisions, smart watches and other wearable devices, as well as any variation or combination thereof.

Computing system 901 may be implemented as a single apparatus, system, or device or may be implemented in a distributed manner as multiple apparatuses, systems, or devices. Computing system 901 includes, but is not limited to, processing system 902, storage system 903, software 905, communication interface system 907, and user interface system 909. Processing system 902 is operatively coupled with storage system 903, communication interface system 907, and user interface system 909.

Processing system 902 loads and executes software 905 from storage system 903. Software 905 includes anti-phishing process 906 which is representative of the processes discussed with respect to the preceding Figures 1-8, including anti-phishing process 200, 500, and 800. When executed by processing system 902 to detect and mitigate against phishing attacks, software 905 directs processing system 902 to operate as described herein for at least the various processes, operational scenarios, and sequences discussed in the foregoing implementations. Computing system 901 may optionally include additional devices, features, or functionality not discussed for purposes of brevity.

Referring still to Figure 9, processing system 902 may comprise a microprocessor and other circuitry that retrieves and executes software 905 from storage system 903. Processing system 902 may be implemented within a single processing device, but may also be distributed across multiple processing devices or sub-systems that cooperate in executing program instructions. Examples of processing system 902 include general purpose central processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device, but may also be implemented across multiple storage devices or sub-systems co-located or distributed relative to each other. Storage system 903 may comprise additional elements, such as a controller, capable of communicating with processing system 902 or possibly other systems.

Software 905 may be implemented in program instructions and among other functions may, when executed by processing system 902, direct processing system 902 to operate as described with respect to the various operational scenarios, sequences, and processes illustrated herein. For example, software 905 may include program instructions for implementing an edge service (e.g. edge service 105, 405, and 701).

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtual machine software, or other application software, in addition to or that include anti-phishing process 906. Software 905 may also comprise firmware or some other form of machine-readable processing instructions executable by processing system 902.

In general, software 905 may, when loaded into processing system 902 and executed, transform a suitable apparatus, system, or device (of which computing system 901 is representative) overall from a general-purpose computing system into a special-purpose computing system customized to facilitate phishing attack detection and mitigation. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

User interface system 909 is optional and may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 909. In some cases, the input and output devices may be combined in a single device, such as a display capable of displaying images and receiving touch gestures. The aforementioned user input and output devices are well known in the art and need not be discussed at length here.

User interface system 909 may also include associated user interface software executable by processing system 902 in support of the various user input and output devices discussed above. Separately or in conjunction with each other and other hardware and software elements, the user interface software and user interface devices may support a graphical user interface, a natural user interface, or any other type of user interface.

Communication between computing system 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses, computing backplanes, or any other type of network, combination of network, or variation thereof. The aforementioned communication networks and protocols are well known and need not be discussed at length here. However, some communication protocols that may be used include, but are not limited to, the Internet protocol (IP, IPv4, IPv6, etc.), the transfer control protocol (TCP), and the user datagram protocol (UDP), as well as any other suitable communication protocol, variation, or combination thereof.

In any of the aforementioned examples in which data, content, or any other type of information is exchanged, the exchange of information may occur in accordance with any of a variety of protocols, including FTP (file transfer protocol), HTTP (hypertext transfer protocol), REST (representational state transfer), Web Socket, DOM (Document Object Model), HTML (hypertext markup language), CSS (cascading style sheets), HTML5, XML (extensible markup language), JavaScript, JSON (JavaScript Object Notation), and AJAX (Asynchronous JavaScript and XML), as well as any other suitable protocol, variation, or combination thereof.

Certain inventive aspects may be appreciated from the foregoing disclosure, of which the following are various examples.
Example 1. A method for mitigating phishing attacks, the method comprising: receiving emails intended for recipient mailboxes in an email system; examining the emails for web links to web pages included therein; in response to an email that is encountered in the emails that includes a web link to a web page, retrieving the web page using the web link; determining if the email comprises an occurrence of a phishing attack against at least a protected web page based at least in part on a comparison of the web page to the protected web page; and in response to the occurrence of the phishing attack, mitigating the phishing attack against the protected web page.
Example 2. The method of Example 1 wherein the protected web page comprises a login page to a web site and wherein mitigating the phishing attack against the protected web page comprises submitting tracking credentials to the web page.
Example 3. The method of Examples 1-2 wherein mitigating the phishing attack against the protected web page further comprises monitoring for an attempt to access the web site with the tracking credentials.
Example 4. The method of Examples 1-3 wherein mitigating the phishing attack against the protected web page comprises blocking the email from being delivered to a recipient mailbox.
Example 5. The method of Examples 1-4 further comprising selecting the protected web page from a set of protected web pages based on at least one of a plurality of characteristics of the email.
Example 6. The method of Examples 1-5 wherein the comparison of the web page comprises a similarity analysis to determine how similar the web page is to the protected web page.
Example 7. The method of Examples 1-6 wherein the comparison produces a similarity metric that indicates a level of similarity between the web page and the protected web page.
Example 8. A computing apparatus comprising: one or more computer readable storage media; a processing system operatively coupled to the one or more computer readable storage media; and program instructions stored on the one or more computer readable storage media for mitigating phishing attacks that, when executed by the processing system, direct the processing system to at least: as emails intended for recipient mailboxes in an email system arrive, examine the emails for web links to web pages included therein; in response to an email that is encountered in the emails that includes a web link to a web page, retrieve the web page; perform a comparison of the web page to a protected web page to determine if the email comprises an occurrence of a phishing attack against the protected web page; and in response to the occurrence of the phishing attack, mitigate the phishing attack against the protected web page.
Example 9. The computing apparatus of Example 8 wherein the protected web page comprises a login page to a web site and wherein mitigating the phishing attack against the protected web page comprises submitting tracking credentials to the web page.
Example 10. The computing apparatus of Examples 8-9 wherein mitigating the phishing attack against the protected web page further comprises monitoring for an attempt to access the web site with the tracking credentials.
Example 11. The computing apparatus of Examples 8-10 wherein mitigating the phishing attack against the protected web page comprises blocking the email from being delivered to a recipient mailbox, removing the email from any other mailbox it was delivered to, reporting the email to an administrative function, and reporting to the administrative function how many recipients clicked on the URL.
Example 12. The computing apparatus of Examples 8-11 further comprising selecting the protected web page from a set of protected web pages based on at least one of a plurality of characteristics of the email.
Example 13. The computing apparatus of Examples 8-12 wherein the comparison of the web page comprises a similarity analysis to determine how similar the web page is to the protected web page.
Example 14. The computing apparatus of Examples 8-13 wherein a result of the comparison comprises a similarity metric that indicates a level of similarity between the web page and the protected web page.
Example 15. A method for mitigating phishing attacks, the method comprising: receiving communications intended for recipients in a communication system; examining the communications for uniform resource locator (URL) links; in response to encountering a communication that includes a URL link, retrieving a resource associated with a URL specified in the URL link; determining if the communication comprises a phishing attack against at least a protected resource based at least in part on a comparison of the resource to the protected resource; and in response to results of the comparison, mitigating the phishing attack against the resource.
Example 16. The method of Example 15 wherein the protected resource comprises a login page to a web site, wherein the resource comprises a fake login page to the web site, and wherein to mitigate the phishing attack against the protected resource, the program instructions direct the processing system to submit tracking credentials to the fake login page.
Example 17. The method of Examples 15-16 wherein to mitigate the phishing attack against the protected resource, the program instructions further direct the processing system to monitor for a later attempt to access the web site with the tracking credentials.
Example 18. The method of Examples 15-17 wherein the communications comprise emails, wherein the communication comprises an email, and wherein to mitigate the phishing attack against the protected resource, the program instructions direct the processing system to block the email from being delivered to a recipient mailbox.
Example 19. The method of Examples 15-18 wherein the communications comprise chat messages, wherein the communication comprises a chat message, and wherein to mitigate the phishing attack against the protected resource, the program instructions direct the processing system to block the chat message from being delivered to a recipient.
Example 20. The method of Examples 15-19 wherein the communications comprise micro-blogging posts, wherein the communication comprises a micro-blogging post, and wherein to mitigate the phishing attack against the protected resource, the program instructions direct the processing system to block the micro-blogging post from being delivered to a recipient.

The functional block diagrams, operational scenarios and sequences, and flow diagrams provided in the Figures are representative of exemplary systems, environments, and methodologies for performing novel aspects of the disclosure. While, for purposes of simplicity of explanation, methods included herein may be in the form of a functional diagram, operational scenario or sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The descriptions and figures included herein depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims.

## Claims

1. A method for mitigating phishing attacks, the method comprising:
receiving emails (131, 133) intended for recipient mailboxes (103) in an email system (101);
examining (201; 501; 801) the emails for web links (132, 134) to web pages (122, 124, 126) included therein;
in response to an email that is encountered in the emails that includes a web link to a web page, retrieving (203; 503; 803) the web page using the web link;
determining (205; 505; 807) if the email comprises an occurrence of a phishing attack against at least a protected web page (126) based at least in part on a comparison of the web page to the protected web page; and
in response to the occurrence of the phishing attack, mitigating (209; 509; 811) the phishing attack against the protected web page,
wherein the protected web page comprises a login page to a web site, wherein mitigating the phishing attack against the protected web page comprises submitting (511) tracking credentials to the web page and wherein mitigating the phishing attack against the protected web page further comprises monitoring (513) for an attempt to access the protected web page with the tracking credential.

2. The method of claim 1 wherein mitigating the phishing attack against the protected web page comprises blocking (509) the email from being delivered to a recipient mailbox.

3. The method of claim 1 further comprising selecting the protected web page from a set of protected web pages based on at least one of a plurality of characteristics of the email.

4. The method of claim 1 wherein the comparison of the web page comprises a similarity analysis to determine how similar the web page is to the protected web page.

5. The method of claim 1 wherein the comparison produces a similarity metric that indicates a level of similarity between the web page and the protected web page.

6. A computing apparatus comprising:
one or more computer readable storage media;
a processing system operatively coupled to the one or more computer readable storage media; and
program instructions stored on the one or more computer readable storage media for mitigating phishing attacks that, when executed by the processing system, direct the processing system to at least:
as emails (131, 133) intended for recipient mailboxes (103) in an email system (101) arrive, examine (501; 801) the emails for web links (132, 134) to web pages (122, 124, 126) included therein;
in response to an email that is encountered in the emails that includes a web link to a web page, retrieve (203; 503; 803) the web page;
perform a comparison (205; 505; 807) of the web page to a protected web page to determine if the email comprises an occurrence of a phishing attack against the protected web page; and
in response to the occurrence of the phishing attack, mitigate (209; 509; 811) the phishing attack against the protected web page,
wherein the protected web page comprises a login page to a web site, wherein mitigating the phishing attack against the protected web page comprises submitting (511) tracking credentials to the web page and wherein mitigating the phishing attack against the protected web page further comprises monitoring (513) for an attempt to access the protected web page with the tracking credential.

7. The computing apparatus of claim 6 wherein mitigating the phishing attack against the protected web page comprises:
blocking (509) the email from being delivered to a recipient mailbox;
removing the email from any other mailbox it was delivered to;
reporting the email to an administrative function; and
reporting to the administrative function how many recipients clicked on the URL.

8. The computing apparatus of claim 6 further configured to select the protected web page from a set of protected web pages based on at least one of a plurality of characteristics of the email.

9. The computing apparatus of claim 6 wherein the comparison of the web page comprises a similarity analysis to determine how similar the web page is to the protected web page.

10. The computing apparatus of claim 9 wherein a result of the comparison comprises a similarity metric that indicates a level of similarity between the web page and the protected web page.

## Patentansprüche

1. Verfahren zur Abwehr von Phishing-Angriffen, wobei das Verfahren umfasst:
Empfangen von E-Mails (131, 133), die für Empfängerpostfächer (103) bestimmt sind, in einem E-Mail-System (101);
Untersuchen (201; 501; 801) der darin enthaltenen E-Mails auf Weblinks (132, 134) zu Webseiten (122, 124, 126);
als Reaktion auf eine E-Mail, die in den E-Mails angetroffen wird, die einen Weblink zu einer Webseite enthalten, Abrufen (203; 503; 803) der Webseite unter Verwendung des Weblinks;
Bestimmen (205; 505; 807), ob die E-Mail das Auftreten eines Phishing-Angriffs gegen wenigstens eine geschützte Webseite (126) umfasst, wenigstens teilweise basierend auf einem Vergleich der Webseite mit der geschützten Webseite; und
als Reaktion auf das Auftreten des Phishing-Angriffs, Abwehren (209; 509; 811) des Phishing-Angriffs auf die geschützte Webseite,
wobei die geschützte Webseite eine Anmeldeseite für eine Website umfasst, wobei das Abwehren des Phishing-Angriffs gegen die geschützte Webseite das Übermitteln (511) von Verfolgungsberechtigungsnachweisen an die Webseite umfasst und das Abwehren des Phishing-Angriffs gegen die geschützte Webseite weiterhin das Überwachen (513) eines Versuchs umfasst, mit dem Verfolgungsberechtigungsnachweis auf die geschützte Webseite zuzugreifen.

2. Verfahren nach Anspruch 1, bei dem das Abwehren des Phishing-Angriffs auf die geschützte Webseite das Blockieren (509) der E-Mail-Zustellung an ein Empfängerpostfach umfasst.

3. Verfahren nach Anspruch 1, weiterhin umfassend das Auswählen der geschützten Webseite aus einem Satz geschützter Webseiten basierend auf wenigstens einer von mehreren Eigenschaften der E-Mail.

4. Verfahren nach Anspruch 1, bei dem der Vergleich der Webseite eine Ähnlichkeitsanalyse umfasst um zu bestimmen, wie ähnlich die Webseite der geschützten Webseite ist.

5. Verfahren nach Anspruch 1, bei dem der Vergleich eine Ähnlichkeitsmetrik erzeugt, die einen Ähnlichkeitsgrad zwischen der Webseite und der geschützten Webseite anzeigt.

6. Computervorrichtung, umfassend:
ein oder mehrere computerlesbare Speichermedien;
ein Verarbeitungssystem, das wirkungsmäßig mit dem einen oder den mehreren computerlesbaren Speichermedien gekoppelt ist; und
auf einem oder mehreren computerlesbaren Speichermedien gespeicherte Programmanweisungen zur Abwehr von Phishing-Angriffen, die das Verarbeitungssystem bei Ausführung durch das Verarbeitungssystem zu wenigstens Folgendem veranlassen:
wenn E-Mails (131, 133), die für Empfängerpostfächer (103) bestimmt sind, in einem E-Mail-System (101) eintreffen, Überprüfen (501; 801) der E-Mails auf Web-Links (132, 134) zu Webseiten (122, 124, 126), die darin enthalten sind;
in Antwort auf eine E-Mail, die in den E-Mails angetroffen wird, die einen Weblink zu einer Webseite enthält, Abrufen (203; 503; 803) der Webseite;
Ausführen eines Vergleichs (205; 505; 807) der Webseite mit einer geschützten Webseite um festzustellen, ob die E-Mail das Auftreten eines Phishing-Angriffs auf die geschützte Webseite umfasst; und
in Reaktion auf das Auftreten des Phishing-Angriffs, Abwehren (209; 509; 811) des Phishing-Angriffs auf die geschützte Webseite,
wobei die geschützte Webseite eine Anmeldeseite für eine Website umfasst, wobei das Abwehren des Phishing-Angriffs gegen die geschützte Webseite das Übermitteln (511) von Verfolgungsnachweisen an die Webseite umfasst und das Abwehren des Phishing-Angriffs gegen die geschützte Webseite weiterhin das Überwachen (513) eines Versuchs umfasst, mit dem Verfolgungsberechtigungsnachweis auf die geschützte Webseite zuzugreifen.

7. Computervorrichtung nach Anspruch 6, bei der das Abwehren des Phishing-Angriffs auf die geschützte Webseite umfasst:
Blockieren (509) der Zustellung der E-Mail an ein Empfängerpostfach;
Entfernen der E-Mail aus einem anderen Postfach, an das sie zugestellt wurde;
Melden der E-Mail an eine Verwaltungsfunktion; und
Melden der Verwaltungsfunktion, wie viele Empfänger auf die URL geklickt haben.

8. Computervorrichtung nach Anspruch 6, weiterhin dazu eingerichtet, die geschützte Webseite aus einem Satz geschützter Webseiten basierend auf wenigstens einer von mehreren Eigenschaften der E-Mail zu wählen.

9. Computervorrichtung nach Anspruch 6, bei der der Vergleich der Webseite eine Ähnlichkeitsanalyse umfasst um zu bestimmen, wie ähnlich die Webseite der geschützten Webseite ist.

10. Computervorrichtung nach Anspruch 9, bei der ein Ergebnis des Vergleichs eine Ähnlichkeitsmetrik umfasst, die einen Ähnlichkeitsgrad zwischen der Webseite und der geschützten Webseite anzeigt.

## Revendications

1. Procédé pour limiter les attaques d'hameçonnage, le procédé comprenant les opérations suivantes:
la réception de courriels (131, 133) destinés à des boîtes aux lettres (103) de destinataires dans un système de courrier électronique (101);
l'examen (201; 501; 801) des courriels pour des liens web (132, 134) vers des pages web (122, 124, 126) qui y sont incluses;
en réponse à un courriel qui est rencontré dans les courriels qui comprennent un lien web vers une page web, la récupération (203; 503; 803) de la page web en utilisant le lien web;
déterminer (205 ; 505 ; 807) si le courriel comprend une occurrence d'une attaque d'hameçonnage contre au moins une page web protégée (126) sur la base au moins en partie d'une comparaison de la page web avec la page web protégée; et
en réponse à l'occurrence de l'attaque d'hameçonnage, limiter (209 ; 509 ; 811) l'attaque d'hameçonnage contre la page Web protégée,
dans lequel la page web protégée comprend une page de connexion à un site web, dans lequel la limitation de l'attaque d'hameçonnage contre la page web protégée comprend la soumission (511) d'informations d'identification de suivi à la page web et dans lequel la limitation de l'attaque d'hameçonnage contre la page web protégée comprend en outre la surveillance (513) d'une tentative d'accès à la page web protégée avec l'information d'identification de suivi.

2. Procédé selon la revendication 1, dans lequel la limitation de l'attaque d'hameçonnage contre la page web protégée comprend le blocage (509) de la livraison du courrier électronique à une boîte aux lettres du destinataire.

3. Le procédé de la revendication 1 comprenant en outre la sélection de la page web protégée à partir d'un ensemble de pages web protégées sur la base d'au moins une d'une pluralité de caractéristiques du courrier électronique.

4. Procédé selon la revendication 1, dans lequel la comparaison de la page Web comprend une analyse de similitude pour déterminer le degré de similitude de la page Web avec la page Web protégée.

5. Procédé selon la revendication 1, dans lequel la comparaison produit une métrique de similitude qui indique un niveau de similitude entre la page Web et la page Web protégée.

6. Appareil de calcul comprenant:
un ou plusieurs supports de stockage lisibles par ordinateur;
un système de traitement couplé de manière opérationnelle à un ou plusieurs supports de stockage lisibles par ordinateur; et
des instructions de programme stockées sur un ou plusieurs supports de stockage lisibles par ordinateur pour limiter les attaques de hameçonnage qui, lorsqu'elles sont exécutées par le système de traitement, dirigent le système de traitement vers au moins;
au fur et à mesure de l'arrivée de courriels (131, 133) destinés à des boîtes aux lettres (103) de destinataires dans un système de courrier électronique (101), l'examen (501; 801) des courriels à la recherche de liens Web (132, 134) vers des pages Web (122, 124, 126) qui y sont incluses;
en réponse à un courriel qui est rencontré dans les courriels qui comprennent un lien web vers une page web, récupérer (203, 503, 803) la page web;
une comparaison (205; 505; 807) de la page web avec une page web protégée pour déterminer si le courriel comprend une occurrence d'une attaque d'hameçonnage contre la page web protégée; et
en réponse à l'occurrence de l'attaque d'hameçonnage, limiter (209 ; 509 ; 811) l'attaque d'hameçonnage contre la page Web protégée,
dans lequel la page web protégée comprend une page de connexion à un site web, dans lequel la limitation de l'attaque d'hameçonnage contre la page web protégée comprend la soumission (511) d'informations d'identification de suivi à la page web et dans lequel la limitation de l'attaque d'hameçonnage contre la page web protégée comprend en outre la surveillance (513) d'une tentative d'accès à la page web protégée avec l'information d'identification de suivi.

7. Appareil informatique selon la revendication 6, dans lequel la limitation de l'attaque d'hameçonnage contre la page web protégée comprend:
le blocage (509) de la livraison du courrier électronique à une boîte aux lettres du destinataire;
la suppression du courrier électronique de toute autre boîte aux lettres à laquelle il a été livré;
le signalement du courrier électronique à une fonction administrative; et
le signalement à la fonction administrative du nombre de destinataires qui ont cliqué sur l'URL.

8. Appareil informatique selon la revendication 6 est en outre configuré pour sélectionner la page Web protégée parmi un ensemble de pages Web protégées sur la base d'au moins une caractéristique parmi une pluralité de caractéristiques du courrier électronique.

9. Appareil de calcul selon la revendication 6, dans lequel la comparaison de la page Web comprend une analyse de similitude pour déterminer la similitude de la page Web avec la page Web protégée.

10. Appareil de calcul selon la revendication 9, dans lequel un résultat de la comparaison comprend une métrique de similitude qui indique un niveau de similitude entre la page Web et la page Web protégée.
